(19) Europäisches Patentamt
European Patent Office
Office européen des brevets

(11) **EP 3 495 610 B1**

(12) **EUROPEAN PATENT SPECIFICATION**

(45) Date of publication and mention of the grant of the patent:
**25.11.2020 Bulletin 2020/48**

(51) Int Cl.:
***F01D 3/04*** *(2006.01)*

(21) Application number: **17425124.9**

(22) Date of filing: **07.12.2017**

(54) **GAS TURBINE ELECTRIC POWER PLANT AND METHOD FOR OPERATING SAID PLANT**

GASTURBINENKRAFTWERK UND VERFAHREN ZUM BETRIEB DES KRAFTWERKS

CENTRALE ÉLECTRIQUE À TURBINE À GAZ ET PROCÉDÉ DE FONCTIONNEMENT DE LADITE CENTRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.06.2019 Bulletin 2019/24**

(73) Proprietor: **Ansaldo Energia S.p.A.**
**16152 Genova (IT)**

(72) Inventors:
• **BAVASSANO, Francesco**
**16128 Genova (IT)**
• **MANTERO, Marco**
**16129 Genova (IT)**
• **TRAVERSO, Riccardo**
**16154 Genova (IT)**

(74) Representative: **Bergadano, Mirko et al**
**Studio Torta S.p.A.**
**Via Viotti, 9**
**10121 Torino (IT)**

(56) References cited:
**EP-A1- 2 985 412** **WO-A1-2015/071078**
**WO-A1-2017/055371**

**Description**

TECHNICAL FIELD

The present invention relates to a gas turbine electric power plant and to a method for operating said plant.

BACKGROUND

There are known gas turbine electric power plants comprising a rotor, which extends along a longitudinal axis. The rotor is provided with a seat housing the bearing assembly. As an alternative the rotor is provided with a collar and the bearing acts on this collar. The bearing is configured to counteract the axial force of the rotor during the operation of the plant and, as an option, to move the rotor in the axial direction.

The axial force generated by the rotation of the rotor and the pressurization of the gas turbine can be directed along the axis in both directions, depending on the operative conditions of the plant.

For these reasons bearing assemblies of the known type are provided with a main thrust bearing configured to counteract the rotor movement in one main axial direction (normally towards the outlet of the turbine) and with a secondary thrust bearing configured to counteract the rotor movement in one secondary axial direction opposite to the main axial direction.

The main thrust bearing and the secondary thrust bearing are provided respectively with a plurality of main pads annularly arranged and with a plurality of secondary pads annularly arranged. An example of a bearing assembly of this type is disclosed in document EP2985412.

In use, some main pads and/or secondary pads may be subjected to early deterioration, or even early breaking, as a consequences of overload.

Deterioration of the pads would obviously lead to a non-optimal working of the bearing assembly when the rotor is in use. The overload of the pads could also lead to a gas turbine operation limited in its potential.

At the moment, the solution adopted to overcome this kind of problem is to use oversized pads. However such a solution is not applicable for all the kind of plants, especially when an upgrade of an already existing gas turbine does not allow to fit too large pads.

SUMMARY

The object of the present invention is therefore to provide a gas turbine electric power plant which enables the avoidance or at least the mitigation of the described drawbacks.

In particular, it is an object of the present invention to provide a gas turbine electric power plant not limited in its operation due to the axial thrust and wherein early deterioration of the pads of the thrust bearing is prevented.

According to the present invention, there is provided a gas turbine electric power plant as claimed in claim 1.

Advantageously, the regulating device is able to avoid an overload of the pads of the bearing assembly guaranteeing a correct and efficient working of the bearing assembly.

It is another object of the present invention to provide a method for operating a gas turbine electric power plant which is reliable and avoids a non-optimal working of the thrust bearing assembly.

According to said object the present invention relates to a method for operating a gas turbine electric power plant according to claim 15.

BRIEF DESCRIPTION OF THE DRAWINGS

The present invention will now be described with reference to the accompanying drawings, which illustrate some non-limitative embodiment, in which:

- Figure 1 is a schematic representation of a gas turbine electric power plant according to the present invention;
- Figure 2 is a schematic sectional view, with parts removed for clarity, of a first detail of Figure 1;
- Figure 3 is a schematic sectional perspective view, with parts removed for clarity, of a second detail of Figure 1;
- Figure 4 is a schematic front view, with parts removed for clarity, of a third detail of Figure 1;
- Figure 5 is a schematic block diagram relating to a fifth detail of the gas turbine electric power plant;
- Figure 6 is a flowchart relating to the fifth detail of the gas turbine electric power plant.

DETAILED DESCRIPTION OF EXEMPLARY EMBODIMENTS

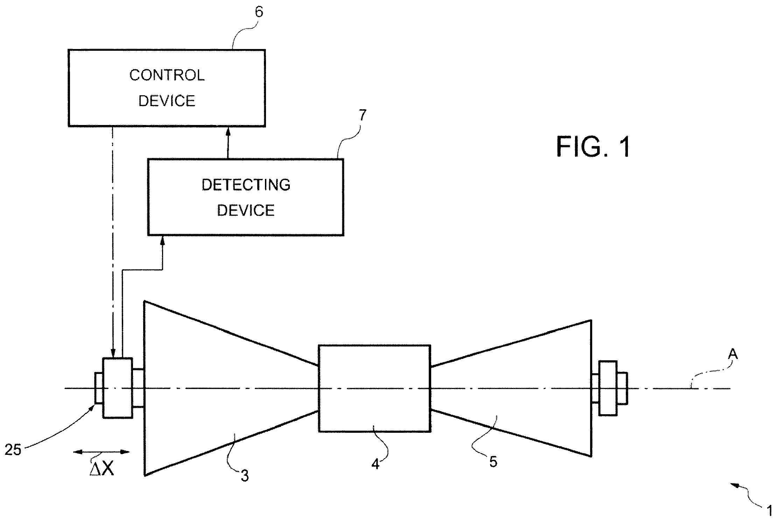

In figure 1 reference numeral 1 indicates a gas turbine electric power plant (schematically shown in Figure 1).

The plant 1 comprises a compressor 3, a combustion chamber 4, a gas turbine 5 and a generator (for simplicity, not show in the attached figures), a control device 6 and a detecting device 7.

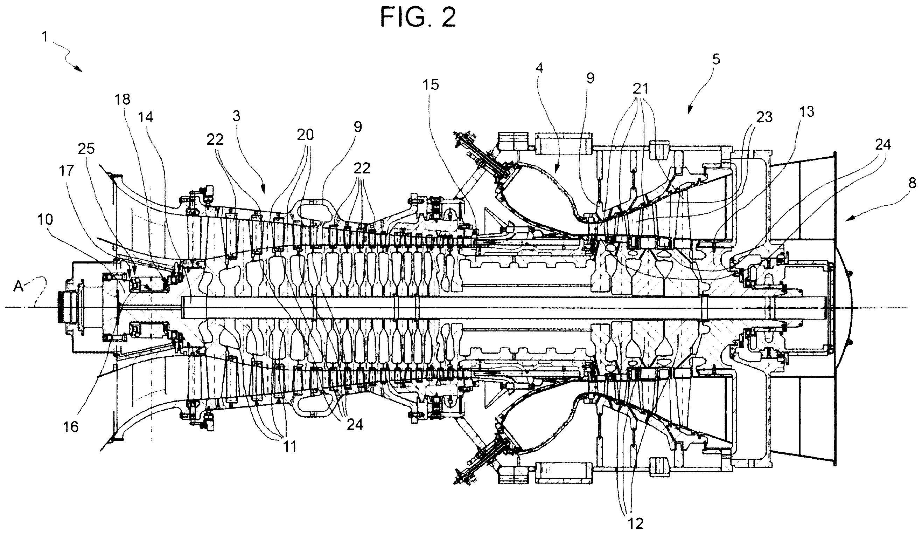

With reference to figure 2, the compressor 3, turbine 5 and generator (not shown) are mounted on the same shaft to form a rotor 8, which is housed in stator casings 9 and extends along an axis A.

In greater detail, the rotor 8 comprises a front shaft 10, a plurality of compressor rotor discs 11, a plurality of turbine rotor discs 12 and a rear shaft 13.

The plurality of compressor rotor discs 11 and the plurality of turbine rotor discs 12 are arranged in succession between the front shaft 10 and the rear shaft 13 and preferably clamped as a pack by a central tie rod 14. As an alternative, the rotor discs may be welded together.

A central shaft 15 separates the compressor rotor discs 11 from the turbine rotor discs 12 and it extends through the combustion chamber 4.

Preferably the front shaft 10 is provided with an annular seat 16 delimited by a main shoulder 17 and a secondary shoulder 18. As an alternative not illustrated in the following figures, the same shoulders and the annular seat may be defined by a collar coupled to the front hollow shaft.

Each compressor rotor disc 10 is equipped with an annular assembly of compressor rotor blades 20, while each turbine rotor disc 11 is equipped with an annular assembly of turbine rotor blades 21.

Further assemblies of compressor stator blades 22 and turbine stator blades 23 are fixed to the casing 9 and to respective stator rings 24 and are alternated with the compressor rotor blades 20 and the turbine rotor blades 21, respectively.

The plant 1 is also equipped with a bearing assembly 25 placed around the front shaft 10 and a bearing assembly 26 placed around the rear shaft 13.

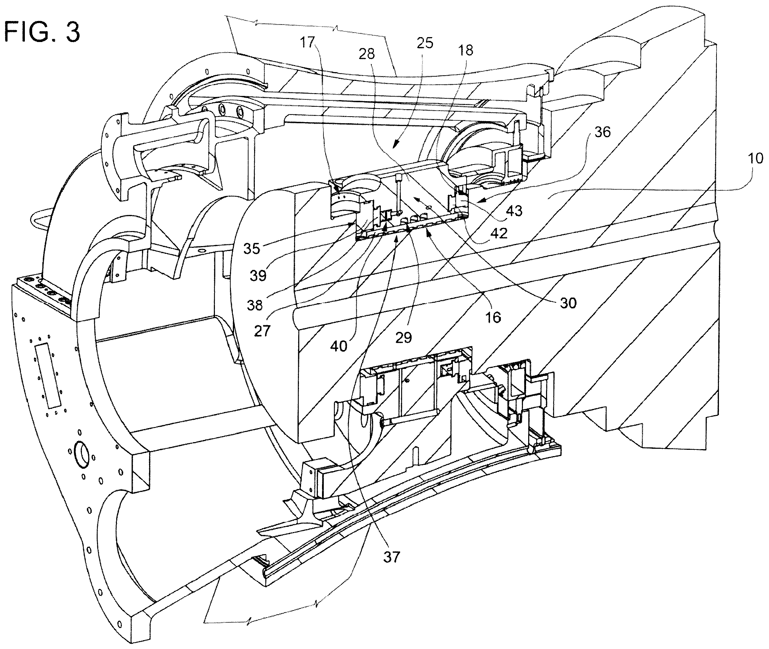

With reference to Figure 3, the bearing assembly 25 substantially engages the annular seat 16 of the front shaft 10 and comprises a journal radial bearing 27 placed around the front shaft 10, a support body 28 placed around the journal bearing 27, a lubrication circuit 29 and a thrust device 30 configured to counteract the movement of the rotor 8 in the axial direction.

The lubrication circuit 29 supplies lubricating oil to the journal bearing 27..

The thrust device 30 comprise a main thrust bearing 35, a secondary thrust bearing 36 and an equalizing device 37.

The main thrust bearing 35 comprises a main thrust ring 38, a plurality of main pads 39 and preferably a plurality of main levers (not visible in the attached figures) arranged between the main thrust ring 38 and the main pads 39. Main levers are configured to transmit the thrust between the main thrust ring 38 and the main pads 39 and to allow a certain load sharing among pads 39.

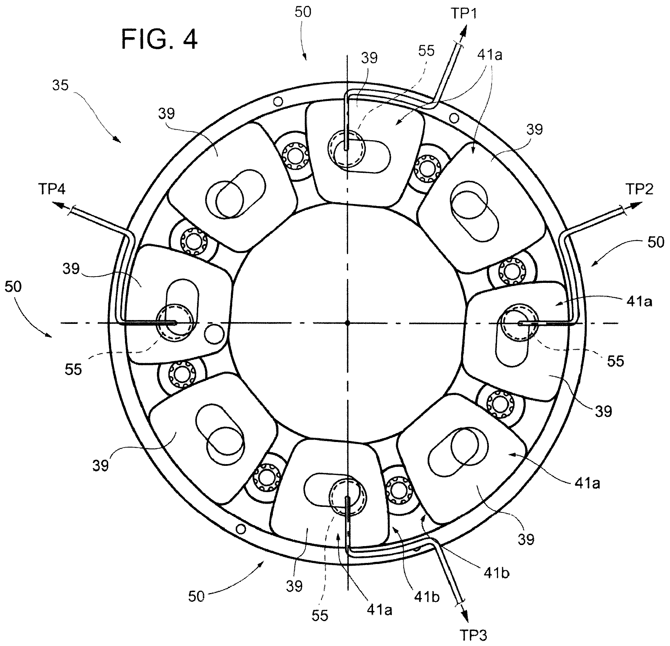

Each main pad 39 has a thrust face 41a (better visible in figure 4) facing the main shoulder 17 and a rear face 41b (better visible in figure 4) opposite to the thrust face 41a. An oil film is preferably present between the main shoulder 17 and the main pads 39 to guarantee an oil wedge creation.

The main thrust ring 38 can be made in one or multiple parts and may be pushed and, if the case shifted axially, by the equalizing device 37.

In particular, the equalizing device 37 comprises an hydraulic circuit wherein a fluid under pressure, usually oil, flows and a plurality of main pistons 40 displaceable in the axial direction in order to move the main thrust ring 38 in the axial direction on the basis of the oil pressure in the hydraulic circuit. In the non-limiting example here disclosed and illustrated the hydraulic circuit is a single circuit acting on all the main pistons 40.

According to a variant not illustrated, the equalizing device 37 comprises a plurality of hydraulic circuits, each of which is fed at different oil pressure levels so that each one of the pistons 40 can be individually displaced by a respective hydraulic circuit.

The movement imparted to the main thrust ring 38 by the main pistons 40 is transmitted to the main pads 39. In this way, a shift is applied to the rotor 8 in the axial direction.

The pressure OP of the oil in the hydraulic circuit of the equalizing device 37 is controlled by the control device 6, as will be seen in detail further on.

According to the variant not illustrated wherein the equalizing device 37 comprises a plurality of hydraulic circuits, the control device 6 will control each oil pressures OP1, OP2, ..., OPz of the respective hydraulic circuit (wherein z is the number of hydraulic circuits which can be equal or lower than the number of main pads 39).

The secondary thrust bearing 36 is preferably similar to the main thrust bearing 35 and comprises a secondary thrust ring 42, a plurality of secondary pads 43 and preferably a plurality of secondary levers (not visible in the attached figures) arranged between the secondary thrust ring 42 and the secondary pads 43. Each secondary pad 43 has a thrust surface (not visible in the attached figures) facing the secondary shoulder 18. An oil film is preferably present between the secondary shoulder 18 and the secondary pads 43 to guarantee an oil wedge creation.

Secondary pads 43 may be pushed and, if the case shifted axially, by the equalizing device 37 by means of secondary pistons (not shown in the attached figures) actuated by a respective hydraulic circuit or alternatively by a plurality hydraulic circuits (not shown in the attached figures) of the equalizing device 37 .

With reference to figure 1 the detecting device 7 is configured to detect at least one parameter indicative of the thrust exerted by the main pads 39 and/or by the secondary pads 43.

In the non-limitative example here disclosed and illustrated, the detecting device 7 is also configured to detect the oil pressure OP inside the hydraulic circuit of the equalizing device 37.

If, according to the variant not shown the equalizing device 37 comprises a plurality of hydraulic circuits, the detecting device 7 is configured to detect the oil pressures OP1, OP2, ...., OPz inside each of the hydraulic circuits of the equalizing device 37.

With reference to figure 4 the detecting device 7 comprises a plurality of thrust sensors 50 configured to measure a parameter indicative of the thrust load exerted on the pads 39 or/and pads 43 by the rotor 8 and at least one pressure sensor (not illustrated) configured to detect the oil pressure OP inside the hydraulic circuit of the equalizing device 37.

Preferably each thrust sensor 50 is configured to measure the axial thrust TP exerted on the main pads 39 of the main thrust bearing 35 of the compressor bearing assembly 25 and comprises at least one load cell 55 (represented in Figure 4 with a dotted line) preferably coupled to the rear face 41b of the respective main pad 39. For example, the load cell 55 can be coupled to a pillar (not shown in the attached figures) of the rear face 41b.

In other words, the plurality of thrust sensors 50 configured to measure a parameter indicative of the thrust load exerted on the pads 39 or/and pads 43 TP1, TP2, ...,TPx being x the number of thrust sensors 50.

Preferably, the detecting device 7 comprises at least four sensors 50 such as load cells 55 and/or temperature probes arranged in contact with respective main pads 39 arranged, for example, at four positions shifted of around 90°.

Each load cell 55 is a transducer that is used to create an electrical signal whose magnitude is directly proportional to the axial force.

In the non-limitative example here disclosed and illustrated the load cells are strain gauge load cells. The strain gauge measures the deformation (strain) as a change in electrical resistance, which is a measure of the strain and hence the applied forces. Preferably, the load cell consists of four strain gauges in a Wheatstone bridge configuration. According to a variant, load cells of one strain gauge (quarter bridge) or two strain gauges (half bridge) are also applicable.

In the non-limitative example here disclosed and illustrated, only the thrust sensors 50 coupled to the main pads 39 have been illustrated and described. However, thrust sensors 50 can be analogously coupled to the secondary pads 43.

According to a variant not depicted, the thrust sensors 50 are temperature sensors configured to measure parameters indicative of the temperature of the pads 39 or/and pads 43. For example, temperature sensors can be thermocouples preferably coupled to the rear face 41b of the pads 39 or/and pads 43 in order to measure the temperature of the metal lining the pads 39 or/and pads 43 are equipped with.

According to a variant not illustrated, the plant 1 can comprises at least one memory device configured to memorize at least one parameter indicative of a thrust as an estimated parameter ETP1, ETP2, ..., ETPx exerted on the main pads 39 and/or the secondary pads 43.

The estimated parameters indicative of a thrust ETP1, ETP2, ..., ETPx are not directly detected on the main pads 39 and/or on the secondary pads 43 and are data coming from "a priori" calculations and/or previous experimentations. Preferably said estimated parameters indicative of a thrust ETP1, ETP2, ...,ETPx are memorized in relation with the operative conditions of the plant 1 according to previous experimentations.

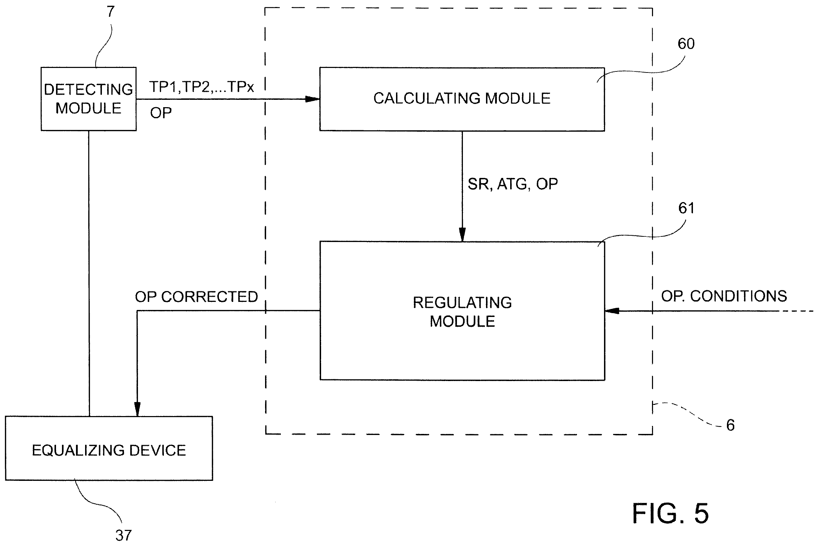

With reference to figure 5, the control device 6 comprises a calculating module 60 configured to calculate at least one parameter indicative of a thrust non-uniformity SR on the basis at least one parameter indicative of a thrust exerted on the main pads 39 and/or on the secondary pads 43 and a regulating module 61 configured to regulate the equalizing device 37 of the bearing assembly 25 on the basis of at least the parameter indicative of a thrust non-uniformity SR.

As already disclosed above, the parameter indicative of a thrust exerted on the main pads 39 and/or on the secondary pads 43 can be a parameter directly measured by the detecting device 7 (TP1, TP2,... , TPx) as shown in figure 5 or, alternatively, a parameter estimated (ETP1, ETP2, ..., ETPx) on the basis of prior calculations and/or experimental data (variant not shown in the attached figures).

The calculating module 60 is configured to:

• calculate an average value ATP of the thrust measured by all the sensors 50 according to the following formula:

$$ATP = \frac{(TP1 + TP2, \ldots + TPx)}{x}$$

wherein:

TP1, TP2,... , TPx are the parameters directly measured by the detecting device 7; and
x is the total number of the thrust sensors 50;

- calculate a global average thrust ATG as the average value ATP multiplied by the number of main pads 39 (or secondary pads 41) which compose the thrust device 30 according to the following formula:

$$ATG = \frac{(TP1 + TP2, ... + TPx)}{x} \times n$$

wherein:

TP1, TP2,... , TPx are the parameters directly measured by the detecting device 7;
x is the total number of the thrust sensors 50;
n is the total number of the main pads 39.

- calculate a counterforce OPF acting on the main thrust bearing 35 (and/or on the secondary thrust bearing 36) on the basis of the oil pressure OP measured by the detecting device 7 according to the following formula:

$$OPF = OP \times PISTONS\ AREA$$

wherein:

PISTONS AREA is the area defined by the total surfaces of the pistons (40) arranged in contact with the pressurized oil in the hydraulic circuit of the equalizing device (37);
OP is the oil pressure measured by the detecting device 7;

- calculate a current maximum difference DELTAmax, which is the maximum absolute value of the difference between the thrust TP measured by each one of the thrust sensors 50 and the average value ATP according to the following formula:

$$DELTAmax = \max|(TP1, T2, .... TPx) - ATP|$$

wherein:

TP1, TP2,... ,TPx are the parameters directly measured by the detecting device 7;
ATP is the average value previously calculated;

- identify the thrust TPMAX associated to the maximum difference DELTAmax; and

- calculate a parameter indicative of a thrust non-uniformity SR according to the following formula:

$$SR = \frac{TPmax}{ATP}$$

Then, the regulating module 61 regulates the oil pressure force OPF (or alternatively OPF1, OPF2, ... ,OPFz in case of an equalizing device comprising a plurality of hydraulic circuits) by increasing or decreasing the oil pressure OP (or, alternatively OP1, OP2, ... , OPz in case of an equalizing device comprising a plurality of hydraulic circuits).

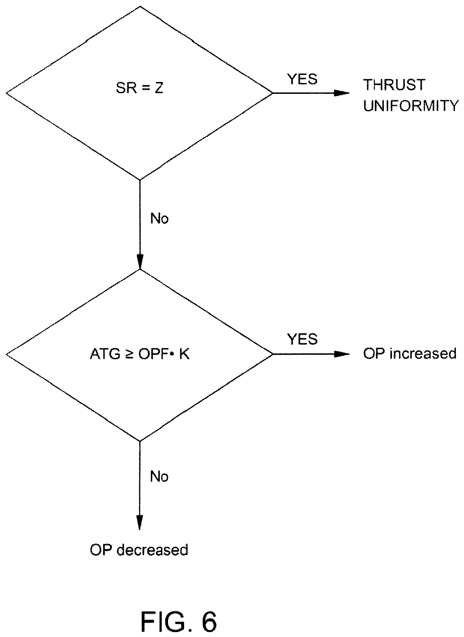

With reference to figure 6, the regulating module 61 is configured to check if SR differs from a reference value Z in order to identify a condition of thrust non uniformity. In other words, if SR=Z the thrust on the pads 39 and/or 43 is equalized, while, if SR≠Z the thrust on the pads is not uniform; Z is a reference value defined on the basis of experimental data.

If a condition of thrust non uniformity is identified (SR≠Z) the regulating module 61 is configured to check the value of the ATG with respect to the value of a parameter defined by the product of the oil pressure force OPF with a calibration factor K in order to define how to correct the oil pressure force in the equalizing device 37.

In other words, if ATG ≥ (OPF × K) the oil pressure OP is increased, while if ATG ≤ (OPF × K) the oil pressure OP is reduced.

In this way a certain balance between the global average thrust ATG and the oil pressure force OPF is targeted so that the equalizing device 37 can reduce the non-uniformity of the thrust by moving its internal components (e.g. pistons 40).

According to the alternative embodiment wherein the equalizing device 37 comprises multiple hydraulic circuits OPF is evaluated as the sum of OPF1, OPF2, ..., OPFz and the single pressures OP1, OP2, ..., OPz are individually increased or decreased, while SR is not evaluated among all the sensors but in the sector of the thrust bearing associated to the each hydraulic circuit.

Therefore, according to said variant not illustrated a plurality of parameters indicative of a thrust non-uniformity SR1, SR2, SRj will be calculated for each sector. The number of sectors j can different from the number of hydraulic circuits z.

As already disclosed above, a variant not illustrated provides that the plant comprises at least one memory device configured to memorize estimated parameters indicative of a thrust ETP1, ETP2, ..., ETPx not directly detected on the main pads 39 and/or on the secondary pads 43 and coming from "a priori" calculations and/or previous experimentation. In this case the calculation module is configured to calculate an expected global thrust ETG coming instead, for instance, from calculations and/or previous experimentation, and to calculate the expected thrust of a single pad ETP as the expected global thrust ETG divided by the number of pads n.

In use, when the rotor 8 starts its rotation, or alternatively, when pre-defined plant operating conditions are reached, the detecting device 7 and the control device 6 are activated and they are maintained active until the rotor 8 ends to rotate, or alternatively, until the pre-defined plant operating conditions are maintained.

For example, the detecting device 7 and the control device 6 are activated when a condition of "full speed and no load" (also called in the field as "idle point") is reached and/or when the load on the main thrust bearing or on the secondary thrust bearing is greater than a minimum threshold value.

In this way the regulation of the pressure OP in the hydraulic circuit of the equalizing device 37 can be continuously performed during the rotation of the rotor 8 (i.e. when the plant 1 is operating) or performed in presence of certain operating conditions, such as but not limited to thermal regimen of the plant 1.

Such regulation avoids a non-optimal working of the bearing assembly 25 and, overall, avoids an overload of the pads 39 and/or pads 43 of the bearing assembly 25 guaranteeing a correct and efficient working of the bearing assembly 25 itself.

Finally, it is clear that modifications and variants can be made to the method and to the plant described herein without departing from the scope of the present invention, as defined in the appended claims.

**Claims**

1. A gas turbine electric power plant comprising:

   - a rotor (8), which extends along a longitudinal axis (A) and is provided with a seat (16) having two annular shoulders (17, 18);
   - at least one thrust bearing assembly (25) housed in the seat (16); the thrust bearing assembly (25) being provided with a plurality of pads (39; 43) circumferentially arranged and with an equalizing device (37) configured to equalize the thrust on the pads (39; 43); the pads (39; 43) facing a respective annular shoulder (17; 18) of the rotor (8);
   - the plant being **characterized by** a control device (6) comprising a calculating module (60) configured to calculate at least one parameter indicative of a thrust non-uniformity (SR) amongst the circumferentially arranged pads on the basis of at least one parameter (TP1, TP2, ..., TPX) indicative of a thrust exerted on the pads (39; 43) and a regulating module (61) configured to regulate the equalizing device (37) on the basis of the at least one parameter indicative of a thrust non-uniformity (SR).

2. Plant according to claim 1, comprising at least one detecting device (7) configured to detect the at least one parameter indicative of a thrust (TP1, TP2, ..., TPx) exerted on the pads (39; 43).

3. Plant according to claim 1, comprising at least one memory device configured to memorize the at least one parameter indicative of a thrust (ETP1, ETP2, ..., ETPx) exerted on the pads (39; 43); the at least one parameter indicative of a thrust exerted on the pads (39; 43) being a parameter estimated on the basis of a prior calculations and/or experimental data.

4. Plant according to anyone of the foregoing claims, wherein the equalizing device (37) comprises at least one hydraulic circuit and a plurality of pistons (40) which are displaceable on the basis of the pressure of the fluid (OP) in the hydraulic circuit in order to move the pads (39; 43).

5. Plant according to anyone of the foregoing claims, wherein the equalizing device (37) comprises a plurality of hydraulic circuits and a plurality of pistons (40), each of which is associated to a respective hydraulic circuit and is displaceable on the basis of the pressure of the fluid (OP1, OP2,..., OPz) in the respective hydraulic circuit in order to move the pads (39; 43).

6. Plant according to claim 4 or 5, wherein the regulating module (61) is configured to regulate the pressure (OP; OP1, OP2,..., OPz) of the fluid in the at least one hydraulic circuit.

7. Plant according to anyone of the claims from 4 to 6, wherein the detecting device (7) comprises a plurality of thrust sensors (50); each thrust sensor (50) of the plurality of thrust sensors (50) is arranged in contact with a respective pad (39; 43).

8. Plant according to claim 7, wherein thrust sensor (50) is coupled to a rear face (41b) of the respective pad (39; 43); the rear face (41b) being opposite to the thrust face (41a) which faces the respective annular shoulder (17; 18) of the rotor (8).

9. Plant according to claim 7 or 8, wherein the thrust sensor (50) are load cells (55) configured to generate an electrical signal whose magnitude is directly proportional to the load they are subjected to.

10. Plant according to claims 7 or 8, wherein the thrust sensor (50) are temperature sensors.

11. Plant according to anyone of the claims from 4 to 10, wherein the detecting device (7) comprises at least one sensor configured to detect the oil pressure (OP; OP1, OP2,..., OPz) inside the at least one hydraulic circuit of the equalizing device (37).

12. Plant according to anyone of the claims from 7 to 11, wherein the calculating module (60) is configured to:

- calculate an average value (ATP) of the thrust measured by all the detecting device (7) according to the following formula:

$$ATP = \frac{(TP1 + TP2, ... + TPx)}{x}$$

wherein:

TP1, TP2, ..., TPx are the parameters directly measured by the detecting device (7); and
(x) is the total number of the thrust sensors (50);

- calculate a global average thrust ATG as the average value ATP multiplied by the number of main pads (39; 41) which compose the thrust device (30) according to the following formula:

$$ATG = \frac{(TP1 + TP2, ... + TPx)}{x} \times n$$

wherein:

TP1, TP2, ..., TPx are the parameters directly measured by the detecting device (7);
(x) is the total number of the thrust sensors (50);
(n) is the total number of the pads (39;41).

- calculate a current maximum difference DELTAmax which is the maximum absolute value of the difference between the thrust (TP1, TP2,... TPx) measured by each one of the thrust sensors (50) and the average value

(ATP) according to the following formula:

$$DELTAmax = \max|(TP1, T2, \ldots . TPx) - ATP|$$

wherein:

TP1 TP2, ..., TPx are the parameters directly measured by the detecting device (7);
ATP is the average value previously calculated;

- identify the thrust TPMAX associated to the maximum difference DELTAmax; and
- calculate a parameter indicative of a thrust non-uniformity (SR) according to the following formula:

$$SR = \frac{TPmax}{ATP}$$

**13.** Plant according to claim 11 and 12, wherein the calculating module (60) is configured to calculate at least one counterforce acting on the pads (39; 43) on the basis of the oil pressure (OP; OP1, OP2, ..., OPz) measured by the detecting device (7) according to the following formula:

$$OPF = (OP; OP1, OP2, \ldots OPz) \times PISTONS\ AREA$$

wherein:

PISTONS AREA is the total area defined by the surfaces of the pistons (40) arranged in contact with the pressurized oil in the hydraulic circuit of the equalizing device (37);
OP, OP1, OP2, ..., OPz is the oil pressure measured by the detecting device (7).

**14.** Plant according to claim 13, wherein the regulating module (61) is configured to regulate the oil pressure force by increasing or decreasing the oil pressure (OP; OP1, OP2, ..., OPz) on the basis of the comparison between the parameter indicative of a thrust non-uniformity (SR) and a reference value (Z).

**15.** Method for operating a gas turbine plant; the plant comprising a rotor (8), which extends along a longitudinal axis (A) and is provided with a seat (16) having two annular shoulders (17, 18); at least one thrust bearing assembly (25) housed in the seat (16); the thrust bearing assembly (25) being provided with a plurality of pads (39; 43) circumferentially arranged and with an equalizing device (37) configured to equalize the thrust on the pads (39; 43) ; the pads (39; 43) of the at least one plurality of pads facing a respective annular shoulder (17; 18) of the rotor (8); the method being **characterized by**:

- calculating at least one parameter indicative of a thrust non-uniformity (SR) amongst the circumferentially arranged pads on the basis of at least one parameter (TP1, TP2, TPx) indicative of a thrust exerted on the pads (39; 43); and
- regulating the equalizing device (37) on the basis of the at least one parameter indicative of a thrust non-uniformity (SR) .

**16.** Method according to claim 15, comprising the step of detecting the at least one parameter indicative of a thrust (TP1, TP2, ..., TPx) exerted on the pads (39; 43).

**17.** Method according to claim 15, comprising the step of memorizing the at least one parameter indicative of a thrust exerted on the pads (39; 43) ; the at least one parameter indicative of a thrust exerted on the pads (39; 43) being a parameter estimated on the basis of a prior calculations and/or experimental data.

**18.** Method according to anyone of claims from 15 to 17, wherein the steps of calculating and regulating are continuously performed from the starting of the rotation of the rotor (8) until the end of the rotation of the rotor (8) .

**19.** Method according to anyone of claims from 15 to 17 wherein the steps of calculating and regulating are continuously performed when predefined operating conditions of the plant are reached and maintained.

**Patentansprüche**

**1.** Elektrisches Gasturbinenkraftwerk, umfassend:

- einen Rotor (8), der sich entlang einer Längsachse (A) erstreckt und mit einem Sitz (16) mit zwei ringförmigen Schultern (17; 18) versehen ist;
- mindestens eine Axiallageranordnung (25), die in dem Sitz (16) untergebracht ist; wobei die Axiallageranordnung (25) mit einer Mehrzahl von in Umfangsrichtung angeordneten Gleitschuhe (39; 43) und mit einer Ausgleichsvorrichtung (37) versehen ist, die so konfiguriert ist, dass sie den Druck auf die Gleitschuhe (39; 43) ausgleicht, wobei die Gleitschuhe (39; 43) einer jeweiligen ringförmigen Schulter (17; 18) des Rotors (8) zugewandt sind;
- wobei das Kraftwerk **gekennzeichnet ist durch** eine Steuervorrichtung (6), die ein Berechnungsmodul (60) umfasst, das so konfiguriert ist, dass es mindestens einen Parameter, der eine Schubungleichförmigkeit (SR) unter den in Umfangsrichtung angeordneten Gleitschuhen auf der Basis mindestens eines Parameters (TP1, TP2, ..., TPX) berechnet, der einen auf die Gleitschuhe (39; 43) ausgeübten Schub anzeigt, und ein Regelmodul (61), das so konfiguriert ist, dass es die Ausgleichsvorrichtung (37) auf der Basis des mindestens einen Parameters, der eine Schubungleichförmigkeit (SR) anzeigt, regelt.

**2.** Kraftwerk nach Anspruch 1, umfassend mindestens eine Erfassungsvorrichtung (7), die so konfiguriert ist, dass sie den mindestens einen Parameter erfasst, der einen auf die Gleitschuhe (39; 43) ausgeübten Schub (TP1, TP2, ..., TPx) anzeigt.

**3.** Kraftwerk nach Anspruch 1, umfassend mindestens eine Speichervorrichtung, die so konfiguriert ist, dass sie den mindestens einen Parameter speichert, der einen auf die Gleitschuhe (39; 43) ausgeübten Schub (ETP1, ETP2, ..., ETPx) anzeigt; wobei der mindestens eine Parameter, der einen auf die Gleitschuhe (39; 43) ausgeübten Schub anzeigt, ein Parameter ist, der auf der Grundlage einer vorherigen Berechnung und/oder experimenteller Daten geschätzt wird.

**4.** Kraftwerk nach einem der vorstehenden Ansprüche, wobei die Ausgleichsvorrichtung (37) mindestens einen Hydraulikkreislauf und eine Mehrzahl von Kolben (40) aufweist, die verschiebbar sind auf der Grundlage des Drucks des Fluids (OP) in dem Hydraulikkreislauf, um die Gleitschuhe (39; 43) zu bewegen.

**5.** Kraftwerk nach einem der vorstehenden Ansprüche, wobei die Ausgleichsvorrichtung (37) eine Mehrzahl von Hydraulikkreisen und eine Mehrzahl von Kolben (40) aufweist, von denen jeder einem jeweiligen Hydraulikkreis zugeordnet ist und auf der Grundlage des Drucks des Fluids (OP1, OP2, ..., OPz) in dem jeweiligen Hydraulikkreis verschiebbar ist, um die Gleitschuhe (39; 43) zu bewegen.

**6.** Kraftwerk nach Anspruch 4 oder 5, wobei das Regelmodul (61) konfiguriert ist, um den Druck (OP; OP1, OP2, ..., OPz) des Fluids in dem mindestens einen Hydraulikkreis zu regeln.

**7.** Kraftwerk nach einem der Ansprüche 4 bis 6, wobei die Erfassungsvorrichtung (7) eine Mehrzahl von Schubsensoren (50) umfasst; jeder Schubsensor (50) der Mehrzahl von Schubsensoren (50) ist in Kontakt mit einem entsprechenden Gleitschuh (39; 43) angeordnet.

**8.** Kraftwerk nach Anspruch 7, wobei der Schubsensor (50) mit einer hinteren Fläche (41b) des jeweiligen Gleitschuhs (39; 43) gekoppelt ist; wobei die hintere Fläche (41b) der Schubfläche (41a) gegenüberliegt, die der jeweiligen ringförmigen Schulter (17; 18) des Rotors (8) zugewandt ist.

**9.** Kraftwerk nach Anspruch 7 oder 8, bei der die Schubsensoren (50) Wiegezellen (55) sind, die so konfiguriert sind, dass sie ein elektrisches Signal erzeugen, dessen Größe direkt proportional zu der Last ist, der sie ausgesetzt sind.

**10.** Kraftwerk nach Anspruch 7 oder 8, bei der die Schubsensoren (50) Temperatursensoren sind.

**11.** Kraftwerk nach einem der Ansprüche 4 bis 10, wobei die Erfassungsvorrichtung (7) mindestens einen Sensor umfasst, der so konfiguriert ist, dass er den Öldruck (OP; OP1, OP2, ..., OPz) in dem mindestens einen Hydraulikkreislauf der Ausgleichsvorrichtung (37) erfasst.

12. Kraftwerk nach einem der Ansprüche von 7 bis 11, wobei das Berechnungsmodul (60) konfiguriert ist, um:

einen Mittelwert (ATP) des von der gesamten Erfassungsvorrichtung (7) gemessenen Schubs gemäß der folgenden Formel zu berechnen:

$$ATP= ((TP1+TP2, ... + TPx))/x,$$

wobei:

TP1, TP2, ..., TPx die direkt von der Erfassungsvorrichtung (7) gemessenen Parameter sind; und
(x) die Gesamtzahl der Schubsensoren (50) ist;

einen globalen Durchschnittsschub (ATG) als den Mittelwert (ATP) multipliziert mit der Anzahl der Hauptgleitschuhe (39; 41), die die Schubvorrichtung (30) bilden, gemäß der folgenden Formel zu berechnen:

$$ATG = ((TP1+TP2, ...+TPx))/x \times n,$$

wobei:

TP1, TP2, ..., TPx die direkt von der Erfassungsvorrichtung (7) gemessenen Parameter sind;
(x) die Gesamtzahl der Schubsensoren (50) ist;
(n) die Gesamtzahl der Gleitschuhe (39; 41) ist.

eine aktuelle maximale Differenz (DELTAmax) zu berechnen, die der maximale Betrag der Differenz zwischen dem von jedem der Schubsensoren (50) gemessenen Schub (TP1, TP2, ..., TPx) und dem Mittelwert (ATP) gemäß der folgenden Formel ist:

$$DELTAmax = max \left| (TP1, TP2, ..., TPx)-ATP \right|,$$

wobei:

TP1, TP2, ..., TPx die direkt von der Erfassungsvorrichtung (7) gemessenen Parameter sind;
ATP der zuvor berechnete Durchschnittswert ist;
den Schub TPMAX zu identifizieren, der mit der maximalen Differenz DELTAmax verbunden ist; und

einen Parameter, der eine Schubungleichförmigkeit (SR) anzeigt, nach folgender Formel zu berechnen:

$$SR = TPmax/ATP$$

13. Kraftwerk nach den Ansprüchen 11 und 12, wobei das Berechnungsmodul (60) so konfiguriert ist, dass es mindestens eine auf die Gleitschuhe (39; 43) wirkende Gegenkraft auf der Basis des von der Erfassungsvorrichtung (7) gemessenen Öldrucks (OP; OP1, OP2, ..., OPz) nach der folgenden Formel berechnet:

$$OPF = (OP; OP1, OP2, ..., OPz) \times KOLBENFLÄCHE,$$

wobei:

KOLBENFLÄCHE die Gesamtfläche ist, die durch die Oberflächen der Kolben (40) definiert ist, die in Kontakt mit dem unter Druck stehenden Öl im Hydraulikkreislauf der Ausgleichsvorrichtung (37) angeordnet sind;

OP, OP1, OP2, ..., OPz der von der Erfassungsvorrichtung (7) gemessene Öldruck ist.

14. Kraftwerk nach Anspruch 13, wobei das Regelmodul (61) so konfiguriert ist, dass es die Öldruckkraft durch Erhöhen oder Verringern des Öldrucks (OP; OP1, OP2, ..., OPz) auf der Grundlage des Vergleichs zwischen dem Parameter, der eine Schubungleichförmigkeit (SR) anzeigt, und einem Referenzwert (Z) regelt.

15. Verfahren zum Betreiben eines Gasturbinenkraftwerks; wobei das Kraftwerk umfasst einen Rotor (8), der sich entlang einer Längsachse (A) erstreckt und mit einem Sitz (16) mit zwei ringförmigen Schultern (17, 18) versehen ist; mindestens eine in dem Sitz (16) untergebrachte Axiallageranordnung (25); wobei die Axiallageranordnung (25) mit einer Mehrzahl von Gleitschuhen (39; 43) versehen ist, die in Umfangsrichtung angeordnet sind, und mit einer Ausgleichsvorrichtung (37), die so konfiguriert ist, dass sie den Druck auf die Gleitschuhe (39; 43) ausgleicht, wobei die Gleitschuhe (39; 43) der mindestens einen Mehrzahl von Gleitschuhen einer jeweiligen ringförmigen Schulter (17; 18) des Rotors (8) zugewandt sind; wobei das Verfahren **gekennzeichnet ist durch**:

   - Berechnen mindestens eines Parameters, der eine Schubungleichförmigkeit (SR) zwischen den in Umfangsrichtung angeordneten Gleitschuhen anzeigt, auf der Grundlage mindestens eines Parameters (TP1, TP2, TPx), der einen auf die Gleitschuhe (39; 43) ausgeübten Schub anzeigt; und
   - Regeln der Ausgleichsvorrichtung (37) auf der Grundlage von mindestens einem Parameter, der eine Schubungleichförmigkeit (SR) anzeigt.

16. Verfahren nach Anspruch 15, umfassend den Schritt des Erfassens des mindestens einen Parameters, der einen auf die Gleitschuhes (39; 43) ausgeübten Schub (TP1, TP2, ..., TPx) anzeigt.

17. Verfahren nach Anspruch 15, umfassend den Schritt des Speicherns des mindestens einen Parameters, der einen auf die Gleitschuhe (39; 43) ausgeübten Schub anzeigt; wobei der mindestens eine Parameter, der einen auf die Gleitschuhe (39; 43) ausgeübten Schub anzeigt, ein Parameter ist, der auf der Grundlage einer vorherigen Berechnung und/oder experimenteller Daten geschätzt wird.

18. Verfahren nach einem der Ansprüche von 15 bis 17, wobei die Schritte des Berechnens und Regelns vom Beginn der Drehung des Rotors (8) bis zum Ende der Drehung des Rotors (8) kontinuierlich durchgeführt werden.

19. Verfahren nach einem der Ansprüche von 15 bis 17, wobei die Schritte des Berechnens und Regulierens kontinuierlich durchgeführt werden, wenn vordefinierte Betriebsbedingungen der Anlage erreicht und aufrechterhalten werden.

**Revendications**

1. Centrale électrique à turbine à gaz comprenant :

   - un rotor (8), qui s'étend le long d'un axe longitudinal (A) et est pourvu d'un siège (16) ayant deux épaulements annulaires (17, 18) ;
   - au moins un ensemble palier de poussée (25) logé dans le siège (16) ; l'ensemble palier de poussée (25) étant pourvu d'une pluralité de patins (39 ; 43) agencés circonférentiellement et d'un dispositif d'égalisation (37) configuré pour égaliser la poussée sur les patins (39 ; 43) ; les patins (39 ; 43) faisant face à un épaulement annulaire (17 ; 18) respectif du rotor (8) ;
   - la centrale étant **caractérisée par** un dispositif de commande (6) comprenant un module de calcul (60) configuré pour calculer au moins un paramètre indicatif d'une non-uniformité de poussée (SR) parmi les patins agencés circonférentiellement sur la base d'au moins un paramètre (TP1, TP2, ..., TPX) indicatif d'une poussée exercée sur les patins (39; 43), et un module de régulation (61) configuré pour réguler le dispositif d'égalisation (37) sur la base de l'au moins un paramètre indicatif d'une non-uniformité de poussée (SR).

2. Centrale selon la revendication 1, comprenant au moins un dispositif de détection (7) configuré pour détecter l'au moins un paramètre indicatif d'une poussée (TP1, TP2, ..., TPx) exercée sur les patins (39 ; 43).

3. Centrale selon la revendication 1, comprenant au moins un dispositif de mémoire configuré pour mémoriser l'au moins un paramètre indicatif d'une poussée (ETP1, ETP2, ..., ETPx) exercée sur les patins (39 ; 43) ; l'au moins un paramètre indicatif d'une poussée exercée sur les patins (39 ; 43) étant un paramètre estimé sur la base de calculs préalables et/ou de données expérimentales.

4. Centrale selon l'une quelconque des revendications précédentes, dans laquelle le dispositif d'égalisation (37) comprend au moins un circuit hydraulique et une pluralité de pistons (40) qui peuvent être déplacés sur la base de la pression du fluide (OP) dans le circuit hydraulique afin de déplacer les patins (39 ; 43).

5. Centrale selon l'une quelconque des revendications précédentes, dans laquelle le dispositif d'égalisation (37) comprend une pluralité de circuits hydrauliques et une pluralité de pistons (40), chacun étant associé à un circuit hydraulique respectif et pouvant être déplacé sur la base de la pression du fluide (OP1, OP2, ..., OPz) dans le circuit hydraulique respectif afin de déplacer les patins (39 ; 43).

6. Centrale selon la revendication 4 ou 5, dans laquelle le module de régulation (61) est configuré pour réguler la pression (OP, OP1, OP2, ..., OPz) du fluide de l'au moins un circuit hydraulique.

7. Centrale selon l'une quelconque des revendications 4 à 6, dans laquelle le dispositif de détection (7) comprend une pluralité de capteurs de poussée (50) ; chaque capteur de poussée (50) de la pluralité de capteurs de poussée (50) est agencé en contact avec un patin (39 ; 43) respectif.

8. Centrale selon la revendication 7, dans laquelle le capteur de poussée (50) est couplé à une face arrière (41b) du patin (39 ; 43) respectif ; la face arrière (41b) étant opposée à la face de poussée (41a) qui fait face à l'épaulement annulaire (17 ; 18) respectif du rotor (8).

9. Centrale selon la revendication 7 ou 8, dans laquelle le capteur de poussée (50) correspond à des cellules de charge (55) configurées pour générer un signal électrique dont l'intensité est directement proportionnelle à la charge auxquelles elles sont soumises.

10. Centrale selon la revendication 7 ou 8, dans laquelle le capteur de poussée (50) correspond à des capteurs de température.

11. Centrale selon l'une quelconque des revendications 4 à 10, dans laquelle le dispositif de détection (7) comprend au moins un capteur configuré pour détecter la pression d'huile (OP ; OP1, OP2, ..., OPz) à l'intérieur de l'au moins un circuit hydraulique du dispositif d'égalisation (37).

12. Centrale selon l'une quelconque des revendications 7 à 11, dans laquelle le module de calcul (60) est configuré pour :

- calculer une valeur moyenne (ATP) de la poussée mesurée par l'ensemble du dispositif de détection (7) selon la formule suivante :

$$ATP = \frac{(TP1 + TP2, ... + TPx)}{x}$$

dans laquelle :

TP1, TP2, ..., TPx sont les paramètres directement mesurés par le dispositif de détection (7) ; et
(x) est le nombre total des capteurs de poussée (50) ;

- calculer une poussée moyenne globale ATG comme la valeur moyenne ATP multipliée par le nombre de patins (39 ; 41) principaux qui composent le dispositif de poussée (30) selon la formule suivante :

$$ATG = \frac{(TP1 + TP2, ... + TPx)}{x} \times n$$

dans laquelle :

TP1, TP2, ..., TPx sont les paramètres directement mesurés par le dispositif de détection (7) ; et
(x) est le nombre total des capteurs de poussée (50) ;

(n) est le nombre total des patins (39 ; 41) ;

- calculer une différence maximale courante (DELTAmax) qui est la valeur absolue maximale de la différence entre la poussée (TP1, TP2, ..., TPx) mesurée par chacun des capteurs de poussée (50) et la valeur moyenne (ATP) selon la formule suivante :

$$DELTAmax = max|(TP1, TP2, ..., TPx) - ATP|$$

dans laquelle :

TP1, TP2, ..., TPx sont les paramètres directement mesurés par le dispositif de détection (7) ;
ATP est la valeur moyenne préalablement calculée ;

- identifier la poussée TPMAX associée à la différence maximale DELTAmax ; et
- calculer un paramètre indicatif d'une non-uniformité de poussée (SR) selon la formule suivante :

$$SR = \frac{TPmax}{ATP}$$

**13.** Centrale selon la revendication 11 et 12, dans laquelle le module de calcul (60) est configuré pour calculer au moins une force antagoniste agissant sur les patins (39 ; 43) sur la base de la pression d'huile (OP ; OP1, OP2, ..., OPz) mesurée par le dispositif de détection (7) selon la formule suivante :

$$OPF = (OP ; OP1, OP2, ..., OPz) \times \text{AIRE DES PISTONS}$$

dans laquelle :

AIRE DES PISTONS est l'aire totale définie par les surfaces des pistons (40) agencés en contact avec l'huile sous pression dans le circuit hydraulique du dispositif d'égalisation (37) ;
OP, OP1, OP2, ..., OPz est la pression d'huile mesurée par le dispositif de détection (7).

**14.** Centrale selon la revendication 13, dans laquelle le module de régulation (61) est configuré pour réguler la force de pression d'huile en augmentant ou en réduisant la pression d'huile (OP ; OP1, OP2, ..., OPz) sur la base de la comparaison entre le paramètre indicatif d'une non-uniformité de poussée (SR) et une valeur de référence (Z).

**15.** Procédé de fonctionnement d'une centrale à turbine à gaz ; la centrale comprenant un rotor (8), qui s'étend le long d'un axe longitudinal (A) et est pourvu d'un siège (16) ayant deux épaulements annulaires (17, 18) ; au moins un ensemble palier de poussée (25) logé dans le siège (16) ; l'ensemble palier de poussée (25) étant pourvu d'une pluralité de patins (39 ; 43) agencés circonférentiellement et d'un dispositif d'égalisation (37) configuré pour égaliser la poussée sur les patins (39 ; 43) ; les patins (39 ; 43) de l'au moins une pluralité de patins faisant face à un épaulement annulaire (17 ; 18) respectif du rotor (8) ;
le procédé étant **caractérisé par** :

- le calcul d'au moins un paramètre indicatif d'une non-uniformité de poussée (SR) parmi les patins agencés circonférentiellement sur la base d'au moins un paramètre (TP1, TP2, ..., TPx) indicatif d'une poussée exercée sur les patins (39 ; 43) ; et
- la régulation du dispositif d'égalisation (37) sur la base de l'au moins un paramètre indicatif d'une non-uniformité de poussée (SR).

**16.** Procédé selon la revendication 15, comprenant l'étape de détection de l'au moins un paramètre indicatif d'une poussée (TP1, TP2, ..., TPx) exercée sur les patins (39 ; 43).

**17.** Procédé selon la revendication 15, comprenant l'étape de mémorisation de l'au moins un paramètre indicatif d'une poussée exercée sur les patins (39 ; 43) ;

l'au moins un paramètre indicatif d'une poussée exercée sur les patins (39 ; 43) étant un paramètre estimé sur la base de calculs préalables et/ou de données expérimentales.

18. Procédé selon l'une quelconque des revendications 15 à 17, dans lequel les étapes de calcul et de régulation sont effectuées en continu du début de la rotation du rotor (8) jusqu'à la fin de la rotation du rotor (8).

19. Procédé selon l'une quelconque des revendications 15 à 17, dans lequel les étapes de calcul et de régulation sont effectuées en continu lorsque des conditions de fonctionnement prédéfinies de la centrale sont atteintes et maintenues.

FIG. 1

EP 3 495 610 B1

FIG. 2

FIG. 3

EP 3 495 610 B1

FIG. 4

FIG. 5

FIG. 6

**EP 3 495 610 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2985412 A